Europäisches Patentamt

European Patent Office

Office européen des brevets

(19)

(11) Veröffentlichungsnummer: **0 248 385**
**B1**

(12) **EUROPÄISCHE PATENTSCHRIFT**

(45) Veröffentlichungstag der Patentschrift:
27.12.89

(51) Int. Cl.⁴: **F16D 55/02, F16D 55/224**

(21) Anmeldenummer: **87107908.3**

(22) Anmeldetag: **01.06.87**

(54) **Scheibenbremse und Blattfeder zur Verwendung in einer solchen.**

(30) Priorität: **04.06.86 DE 8615015 U**

(43) Veröffentlichungstag der Anmeldung:
**09.12.87 Patentblatt 87/50**

(45) Bekanntmachung des Hinweises auf die Patenterteilung:
**27.12.89 Patentblatt 89/52**

(84) Benannte Vertragsstaaten:
**DE FR GB IT**

(56) Entgegenhaltungen:
**EP-A- 0 032 462**
**DE-C- 1 750 769**
**FR-A- 2 079 804**
**FR-A- 2 296 129**
**FR-A- 2 461 161**
**GB-A- 1 242 220**
**GB-A- 1 585 159**

(73) Patentinhaber: **LUCAS INDUSTRIES public limited company, Great King Street, Birmingham, B19 2XF West Midlands(GB)**

(72) Erfinder: **Giering, Wilfried, Poststrasse 20, D-5442 Mendig(DE)**
Erfinder: **Topic, Alojzija, Steinstrasse 31, D-5400 Koblenz(DE)**

(74) Vertreter: **von Hellfeld, Axel, Dr. et al, Schweigerstrasse 2, D-8000 München 90(DE)**

**Beschreibung**

Die Erfindung betrifft eine Scheibenbremse mit den Merkmalen des Oberbegriffs des Patentanspruches 1 sowie eine Blattfeder für eine solche Scheibenbremse gemäß den Merkmalen des Oberbegriffs des Patentanspruches 7.

Der Begriff Scheibenbremse ist in bezug auf die Erfindung sehr allgemein zu verstehen und umfaßt sowohl herkömmliche Schwimmsattel-Teilbelag-Scheibenbremsen als auch Scheibenbremsen, bei denen die Reibbeläge auf beiden Seiten der Bremsscheibe durch gesonderte Kolben/Zylinder-Anordnungen (Festsattelbremse) betätigt werden. Auch betrifft die Erfindung Scheibenbremsen sowohl für Personenkraftwagen als auch für schwere Nutzfahrzeuge.

Bei den genannten Scheibenbremsen wird der an die Bremsscheibe anzupressende Reibbelag üblicherweise auf sogenannten Tragplatten gehalten. Die Einheit aus Reibbelag und Tragplatte wird "Bremsbelag" genannt.

Die Tragplatten werden in Belagschächten abgestützt und für eine Bewegung senkrecht zur Ebene der Scheibe geführt. Dabei läßt sich ein Spiel zwischen den Tragplatten und den Führungsflächen des Belagschachtes nicht vermeiden. Dieses Spiel ist bedingt durch die erforderlichen Toleranzen bei der Herstellung der Teile, aber auch durch die erforderliche leichte Beweglichkeit der Tragplatten bei der Bremsbetätigung.

Das notwendige Spiel zwischen den Tragplatten der Bremsbeläge und den Führungsflächen des Belagschachtes führt dazu, daß die Tragplatten mit großer Wucht (großem Impuls) auf die Führungsflächen aufschlagen, wenn das Fahrzeug über eine Boden-Unebenheit fährt. Da die Bremse nicht abgefedert ist, werden bei unruhiger Fahrt auftretende Beschleunigungen der Achsen des Fahrzeuges, also Beschleunigungen hauptsächlich senkrecht zur Bodenebene, voll auf die Bauteile der Bremse übertragen.

Das hammerartige Anschlagen der Belag-Tragplatten auf die Führungsflächen im Belagschacht führt nicht nur zu Geräuschbelästigungen, sondern kann auch zu ernsthaften Beschädigungen der Führungsflächen führen, wodurch das leichte Gleiten der Tragplatten auf diesen Führungsflächen behindert wird. Darüberhinaus können Beschädigungen der Führungsflächen durch mit hoher Geschwindigkeit auftreffende Tragplatten auch dazu führen, daß beim Bremsen die Tragplatte an der beschädigten Stelle der Führungsfläche hängenbleibt. Hierdurch wird die Parallelität zwischen der Arbeitsfläche des Reibbelags und der Bremsscheibe gestört (der Bremsbelag kippt geringfügig), so daß es beim Anpressen des Reibbelages an die Bremsscheibe zu einem ungleichmäßigen Verschleiß kommen kann. Eine derartig einseitige Abnutzung der Reibbeläge ist höchst unerwünscht.

Bei großflächigen Bremsbelägen, wie sie insbesondere für schwere Nutzfahrzeuge vorgesehen werden, wird zur besseren Verteilung der von einem Stößel übertragenen Zuspannkraft auf die Tragplatte häufig eine sogenannte Druckverteilerplatte zwischen dem Stößel und der Tragplatte angeordnet. Die Druckverteilerplatte hat im wesentlichen die gleichen Abmessungen wie die Tragplatte, ist jedoch wesentlich stärker als letztere (typischerweise etwa 2- bis 3-mal so stark). Auch die Druckverteilerplatte wird ebenso wie die Tragplatte an den Führungsflächen des Belagschachtes abgestützt und geführt. Aufgrund ihrer größeren Masse schlägt die Druckverteilerplatte mit noch größerer Wucht als die Tragplatte gegen die Führungsflächen, so daß die eingangs geschilderten Nachteile verstärkt auftreten.

Um das harte Anschlagen der Tragplatten und Druckverteilerplatten gegen die Führungsflächen zu verhindern, werden die festen und bewegten Teile mittels Federn verspannt. Es ist auch bereits bekannt (DE-PS 1 750 769), hierfür Blattfedern einzusetzen.

Bei der Wahl der Federn zum Andrücken der Tragplatten und gegebenenfalls Druckverteilerplatten gegen die Führungsflächen des Belagschachtes stehen sich widersprüchliche Anforderungen gegenüber. Zum einen soll die Federkraft möglichst so groß sein, daß alle im Betrieb auftretenden Beschleunigungen aufgefangen werden können. Hierzu müßte die Feder z.B. bei einer Druckverteilerplatte mit 2,5 kg Masse und bei einer Beschleunigung von etwa 300 m/sec² eine Abstützkraft von ca. 75 kp aufbringen.

Soll die Feder auch noch die beiden Bremsbeläge auffangen, so ergibt sich insgesamt eine Kraft von über 200 kp.

Der Forderung nach einer starken Federkraft zum Auffangen der stark beschleunigten Trag- und Druckverteilerplatten steht die Forderung gegenüber, daß letztere im Belagschacht leicht gängig verschiebbar sein sollen. Die vorstehend berechnete Federkraft von 200 kp führt bei einem Reibungskoeffizienten von 0,3 zu einer Verschiebekraft für die Tragplatte und die Druckverteilerplatte von etwa 60 kp, was höchst nachteilig wäre. Die Trag- und Druckverteilerplatten sollen nämlich sehr leicht entlang den Führungsflächen im Belagschacht verschiebbar sein, um, wie oben bereits erläutert, den Schrägverschleiß der Reibbeläge gering zu halten und um zum anderen nach dem Lösen der Bremse (also dem Wegnehmen der Zuspannkraft) ein sicheres Entfernen der Bremsbeläge von der Bremsscheibe zu gewährleisten. Lösen sich nämlich die Bremsbeläge nicht vollständig von der Bremsscheibe und werden mit einer Restkraft von ca. 60 kp angepreßt, so schleifen sie an der Bremsscheibe, was nicht nur die Lebensdauer des Reibbelages vermindert, sondern auch Antriebsenergie des Fahrzeuges vergeudet. Auch kann es durch das andauernde Schleifen zwischen den Reibbelägen und der Bremsscheibe zu einer permanenten Erhitzung von Fahrzeugteilen einschließlich der Radlager und Reifen führen.

Aus der FR-A 2 461 161 ist eine Blattfeder bekannt, die keinen S-förmigen Verlauf der Kennlinie aufweist. Wenn diese bekannte Blattfeder durchgedrückt wird, wird die rücktreibende Kraft nach überschreiten eines Maximums sich nicht asymptotisch der dem Festanschlag an die Belag-Tragplatte entsprechenden Linie nähern.

In der DE-A 1 936 092 ist eine Blattfeder beschrieben, die einen gewölbten Mittelabschnitt aufweist. Die Blattfeder hat eine im wesentlichen S-förmige Kennlinie. Allerdings wird diese bekannte Blattfeder nicht zum Einsatz in einer Bremse vorgeschlagen, es ist auch nicht angeführt, daß die Kennlinie der Blattfeder sich oberhalb des Wendepunktes der S-förmigen Kennlinienkurve im Einsatz an eine Linie annähern soll, die einem Festanschlag eines Bauteiles entspricht.

Der Erfindung liegt die Aufgabe zugrunde, eine Blattfeder zum Niederhalten der Belag-Tragplatten und gegebenenfalls der Druckverteilerplatte im Belagschacht einer Scheibenbremse derart auszubilden, daß die Bremsbeläge trotz leichter Gängigkeit und Lösbarkeit auch bei starken Beschleunigungen sicher niedergehalten werden, wobei eine gute Belüftung der Bremse gewährleistet sein soll.

Eine diese Aufgabe erfindungsgemäß lösende Scheibenbremse sowie eine entsprechende Blattfeder für eine solche Scheibenbremse sind in den Patentansprüchen 1 bzw. 7 gekennzeichnet.

Die erfindungsgemäß ausgebildete Blattfeder gleicht Fertigungstoleranzen aus und ist in der Lage, Bremsbeläge und Druckverteilerplatten bei Beschleunigungen derselben von bis zu 150 m/sec² sicher niederzuhalten. Bei Beschleunigungen bis etwa 300 m/sec² wirkt die Blattfeder gut dämpfend und bei selten auftretenden Beschleunigungen von über 300 m/sec² wirkt die Blattfeder mit einem Festanschlag derart zusammen, daß keine Beschädigungen an den Führungsflächen auftreten.

Die Blattfeder kann sehr schmal sein, etwa mit einer Breite, die der Stärke der Tragplatte entspricht, so daß die Bremse zur Belüftung gut zugänglich ist.

Vorteilhafte Ausgestaltungen der Erfindung sind in den Unteransprüchen 2–8 beschrieben.

Insbesondere ermöglicht die erfindungsgemäß ausgestaltete Blattfeder folgende Vorteile:

a) Die Kennlinie der Feder, also die Abhängigkeit der Rückstellkraft von der Auslenkung aus der entspannten Normallage, ist derart, daß der Arbeitspunkt (15 g) etwa im Bereich des Wendepunktes einer S-förmigen Kennlinie liegt, wodurch die Fertigungstoleranzen gut ausgeglichen werden, ohne daß die beim Einbau der Feder erforderlichen Kräfte zu groß oder zu klein werden.

b) Die Rennlinie der erfindungsgemäßen Blattfeder verläuft oberhalb des Wendepunktes derart, daß die Rückstellkraft bei extrem starken Kräften sich asymptotisch dem Festanschlag (im dargestellten Ausführungsbeispiel bei einer Auslenkung von 6,5 mm) nähert, so daß der Anschlag völlig gedämpft ist.

c) Die günstige Kennlinie der Blattfeder wird bei geringen Abmessungen und kleinem Gewicht der Feder erzielt.

d) Die erfindungsgemäße Blattfeder ist leicht von Hand montierbar, ohne daß besondere Hilfsmittel erforderlich wären.

e) Die erfindungsgemäß gestaltete Feder ermöglicht es, nicht rostenden Federstahl zu verwenden, der zwar einen geringeren Elastizitätsmodul als gewöhnlicher Federstahl aufweist, aber bei der erfindungsgemäß vorgesehenen Beulung der Seitenabschnitte der Blattfeder eine günstige Kennlinie aufweist.

Nachfolgend wird die Erfindung anhand eines Ausführungsbeispieles näher erläutert. Es zeigen:

Fig. 1 eine Draufsicht auf eine Schwimmrahmen-Teilbelag-Scheibenbremse, teilweise geschnitten, bei der eine erfindungsgemäße Blattfeder verwendet wird;

Fig. 2 eine Vorderansicht der in Fig. 1 gezeigten Bremse;

Fig. 3 eine Seitenansicht der in den Fig. 1 und 2 gezeigten Bremse, bei der die erfindungsgemäße Blattfeder sowie die Bremsbeläge und die Druckverteilerplatte teilweise geschnitten sind;

Fig. 4 eine Ansicht aus Richtung der Bremsscheibe auf einen Bremsbelag und die erfindungsgemäße Blattfeder;

Fig. 5 eine Draufsicht auf den Bremsbelag und die Blattfeder gemäß Fig. 4;

Fig. 6 einen Schnitt entlang der Linie I–I der Fig. 4;

Fig. 7 eine vergrößerte Darstellung der auf der Belag-Tragplatte montierten Blattfeder, wobei der entspannte Zustand mit durchgezogenen Linien und der gespannte Zustand mit gestrichelten Linien gezeigt ist; und

Fig. 8 die Kennlinie einer erfindungsgemäßen Blattfeder.

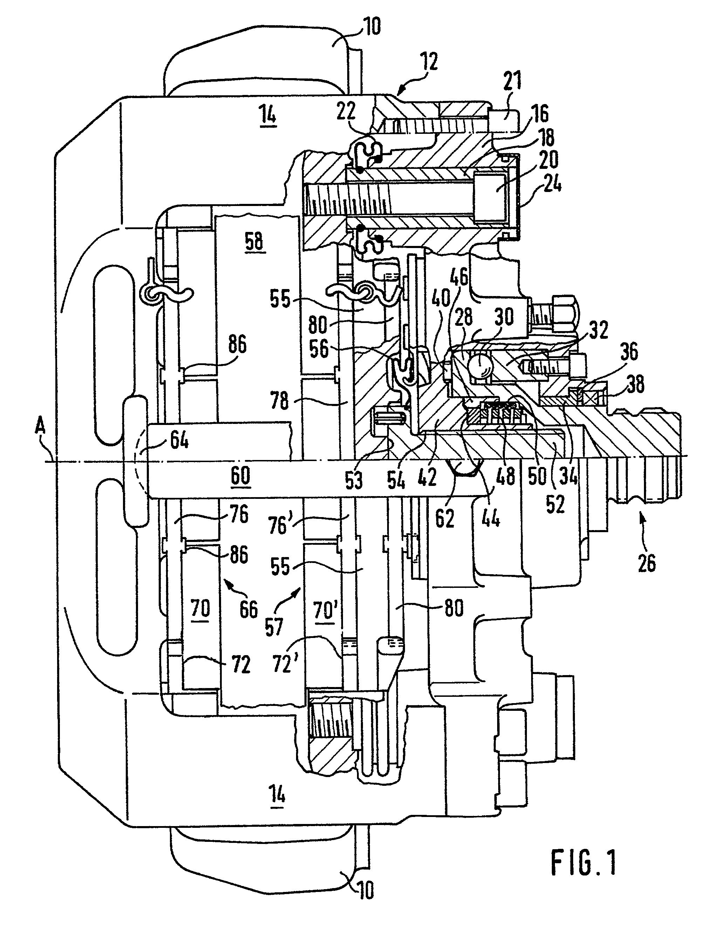

Gemäß Fig. 1 weist die Schwimmrahmen-Teilbelag-Scheibenbremse einen ortsfesten Bremsträger 10 auf, an dem ein Rahmen 12 (hier ein Schwimmrahmen) bewegbar geführt ist. Der Rahmen 12 besteht aus einer die Bremsscheibe (s. unten) übergreifenden Brücke 14 und einem Gehäuse 16. Zur verschiebbaren Lagerung des Rahmens 12 sind zwei Führungshülsen 18 symmetrisch zur Achse A mittels Innensechskantschrauben 20 befestigt. Durch Schrauben 21 werden die Brücke 14 und das Gehäuse 16 zusammengehalten. Die Gleitflächen der Führungshülsen 18 werden durch Faltenbälge 22 und Schutzkappen 24 gegen Schmutz und Spritzwasser abgedichtet.

Die Erzeugung der Spannkraft sowie die Nach- und Rückstellung der Bremse kann in bekannter Weise erfolgen. Beim Ausführungsbeispiel gemäß Fig. 1 wird die Spannkraft der Bremse wie folgt erzeugt: Bei Betätigung der Bremse wird auf die Zahnwelle 26 ein Drehmoment übertragen. Das Drehmoment dreht die bewegliche Kugelrampe 28 über ein Kugellager 30 auf der am Gehäuse 16 festgeschraubten Kugelrampe 32. Die beiden Kugelrampen 28 und 32 sind Teile von Gewinden und wirken wie eine Schrauben/Mutter-Anordnung. Um die Gewindereibung zu reduzieren und die Haltbarkeit zu erhöhen, sind zwischen die Gewindeflächen Kugeln gefügt. Die Kugelrampe 28 bewegt sich auf der Achse A nach links und drückt dabei über das Nadellager 40 auf die Nachstellmutter 42. Diese leitet die Zuspannkraft über das selbsthemmende Gewinde 54 auf den Stößel 52. Durch Verdrehen der Nachstellmutter 42 auf dem Gewinde 54 des Stößels 52 wird die Bremse nachgestellt. Für die selbsttätige Nachstellung dienen die Rutschkupplung 44, der Nachstellring 46, die Anpreßfeder 48 und die Reibfeder 50.

Bei Drehung der Zahnwelle 26 wird somit zwischen den Kugelrampen 28 und 32 eine Spreizkraft erzeugt, wobei der eine Teil dieser Kraft über das Nadellager 40, die Nachstellmutter 42, das Gewinde 54, den Stößel 52, die Stirnfläche 53, eine Druckverteilerplatte 55 und den inneren Bremsbelag 57 zur Bremsscheibe 58 verläuft. Der andere Teil der Spannkraft verläuft über die feste Kugelrampe 32, das Gehäuse 16, die Schrauben 21, die Brücke 14 und den äußeren Bremsbelag 66 zur Bremsscheibe 58.

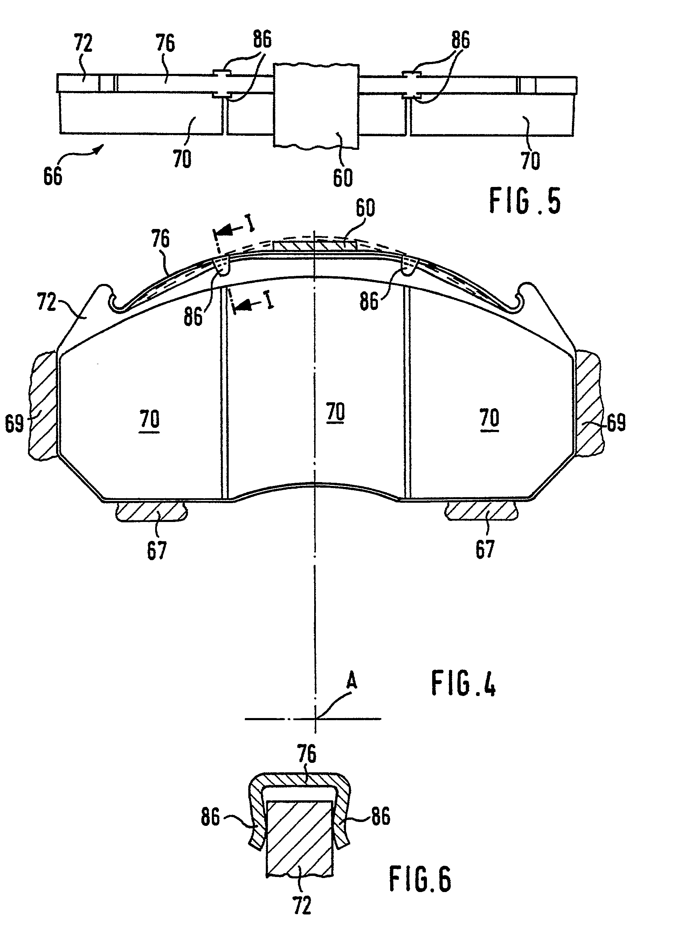

Die Bremsbeläge 57 und 66 sind beidseits der Bremsscheibe 58 durch Führungsflächen 67, 69 abgestützt (Fig. 4). Die Führungsflächen 67, 69 gehören zum Bremsträger 10. Die Bremsbeläge 57, 66 bestehen jeweils aus einem Reibbelag 70, 70' und einer Tragplatte 72, 72'. Der äußere Bremsbelag 66 wird durch die Brücke 14 großflächig und gleichmäßig gegen die Bremsscheibe 58 gedrückt. Da die vom Stößel 52 kommende Spannkraft nur über die verhältnismäßig kleine Stirnfläche 53 auf die innere Tragplatte 72' eingeleitet wird, ist eine Druckverteilerplatte 55 zwischen den Stößel 52 und die Tragplatte 72' des inneren Bremsbelages 57 geschaltet. Die Druckverteilerplatte 55 verteilt die Kraft gleichmäßig auf die Tragplatte 72'.

Die Zahnwelle 26 ist über eine Bundbuchse 34 im Gehäuse 16 gelagert. Die Bundbuchse 34 wird axial durch einen Sprengring 36 gehalten. Eine Radialwellen-Dichtung 38 und ein Faltenbalg 56 dienen dem Schutz der Betätigungs-, Nach- und Rückstellteile.

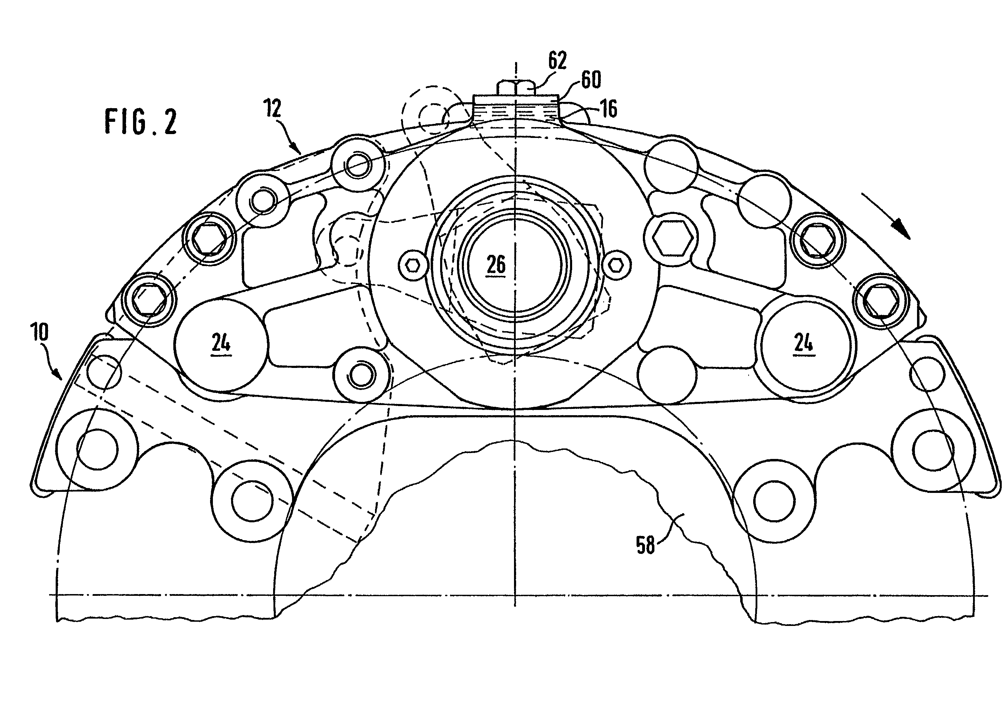

Die Fig. 2 zeigt eine Vorderansicht der Bremse. Wie dargestellt, ist ein Haltebügel 60 mittels einer Schraube 62 am Gehäuse 16 befestigt. Die Funktion des Haltebügels 60 wird nachfolgend näher erläutert.

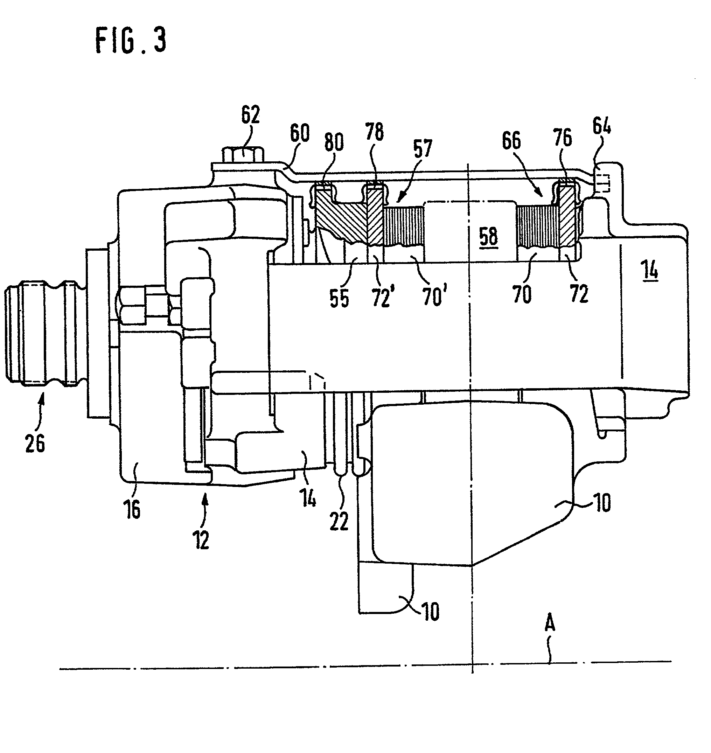

Gemäß Fig. 3 erstreckt sich der Haltebügel 60 über die Druckverteilerplatte 55, die Tragplatte 72', die Bremsscheibe 58 und die äußere Tragplatte 72. In der Brücke 14 ist auf der Außenseite der Bremse eine Aussparung 64 vorgesehen, in welche der Haltebügel 60 eingreift.

Bei Verschleiß der Reibbeläge 70, 70' bewegt sich der Rahmen 12 in Fig. 3 nach links und nimmt den äußeren Bremsbelag 66 mit.

Der äußere Bremsbelag 66 ändert also seine Lage in bezug auf den Haltebügel 60 nicht. Der innere Bremsbelag 57 hingegen und die Druckverteilerplatte 55 werden in bezug auf den Haltebügel 60 nach rechts verschoben.

Wie aus Fig. 4 zu entnehmen ist, stützt sich jeder Bremsbelag 66 bzw. 57 sowie die Druckverteilerplatte 55 radial innen an der Abstützfläche 67 ab. In Umfangsrichtung werden die Bremskräfte richtungsabhängig auf eine der beiden Abstützflächen 69 geleitet. Radial nach außen stützen sich die Bremsbeläge 66, 57 und die Druckverteilerplatte 55 über die Blattfedern 76, 78 bzw. 80 am Haltebügel 60 ab.

Die Blattfedern 78 und 80 (bei einer Festsattelbremse auch die Blattfeder 76) müssen etwas entlang des Haltebügels 60 rutschen, weshalb sie zur Befestigung jeweils mit Laschen 86 (Fig. 6) die Tragplatte 72, 72' bzw. die Druckverteilerplatte 55 umklammern.

Die für die beiden Tragplatten 72, 72' sowie die Druckverteilerplatte 55 jeweils verwendeten Blattfedern 76, 78 bzw. 80 sind beim Ausführungsbeispiel untereinander gleich.

In der Tragplatte 72 sind symmetrisch zur Mittellinie 98, in deren Richtung die Kraft F wirkt, Vertiefungen 82, 82' ausgebildet. Die Endabschnitte 84, 84' der Blattfeder 76 sind halbkreisförmig radial auswärtsgebogen und passen genau in die Vertiefungen 82, 82'.

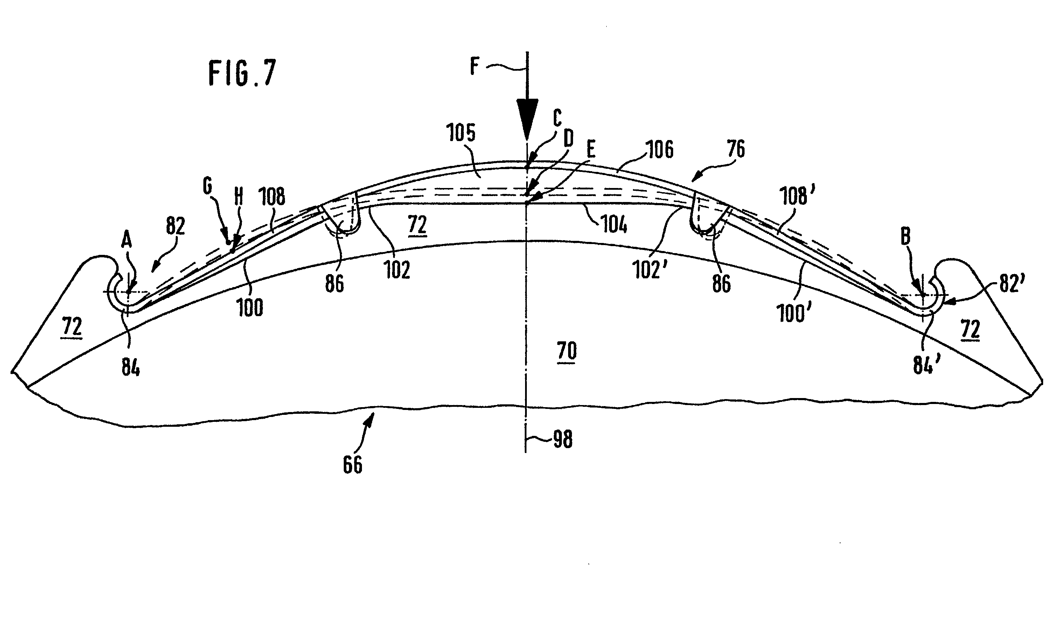

Fig. 7 zeigt die bereits in Fig. 4 dargestellte Blattfeder 76 im Detail. Anders als in Fig. 4 ist mit durchgezogenen Linien der nur leicht verspannte Zustand der Blattfeder 76 gezeichnet, der sich nach dem Einbringen der Endabschnitte 84, 84' in die Vertiefungen 82, 82' ergibt. Nach dem Einbau der Bremse drückt der Haltebügel 60 die Blattfeder 76 in die in Fig. 7 mit gestrichelten Linien dargestellte Position (diese Position ist in Fig. 4 mit durchgezogenen Linien gezeichnet). Der Punkt C der Blattfeder 76 ist bei eingebauter Bremse in die Position D verschoben, ohne daß beschleunigende Kräfte auf die Tragplatte wirken.

Die Blattfeder 76 nimmt also in eingebautem Zustand eine Ruhelage ein, die in Fig. 7 mit gestrichelten Linien dargestellt ist. Die im völlig entspannten Zustand der Blattfeder 76 geraden Seitenabschnitte 108, 108' sind in diesem Zustand gemäß Fig. 7 leicht nach außen vorgewölbt, wobei sich der Punkt H in die Position G verschiebt.

Die Blattfeder 76 weist einen Mittelabschnitt 106 auf sowie die sich daran anschließenden Seitenabschnitte 108, 108'. Der Mittelabschnitt 106 ist im entspannten Zustand etwa kreisförmig gewölbt, während die Seitenabschnitte 108, 108' im entspannten Zustand zumindest annähernd gerade sind. Durch den Spannsitz der Endabschnitte 84, 84' in den Ausnehmungen 82, 82' sowie die Laschen 86 ist die Blattfeder 76 sicher auf der Tragplatte 72 geführt.

Im Bereich des Mittelabschnittes 106 der Blattfeder 76 hat die Tragplatte 72 eine geradlinige Oberkante 104, so daß im entspannten Zustand der Blattfeder zwischen derselben und der Oberkante 104 der Tragplatte 72 ein Freiraum 105 gebildet ist, in welchen sich der Mittelabschnitt 106 der Blattfeder bei Belastung verbiegen kann.

Im Bereich der Seitenabschnitte 108, 108' sind die benachbarten Oberkanten 100, 100' der Tragplatte 72 im wesentlichen geradlinig. Die Übergangsbereiche 102, 102' zwischen den genannten Oberkanten der Tragplatte 72 sind abgerundet.

Zur Montage wird die Blattfeder 76 zunächst mit einem Endabschnitt 84' z.B. bei dem Punkt B in die Ausnehmung 82' eingelegt. Dann wird durch leichtes Anheben bei C die Blattfeder 76 etwas nach außen verbogen. Der andere Endabschnitt 84 der Blattfeder kann dann mit leichtem Daumendruck bei A in die Ausnehmung 82 eingedrückt werden. Die Laschen 86 liegen mit leichter Vorspannung an den Seitenwänden der Tragplatte 72 an. Wie in Fig. 6 dargestellt ist, weisen die Laschen 86 an ihren Enden leichte Aufbiegungen auf, um ein gutes Aufschieben auf die Tragplatte 72 zu ermöglichen.

In Fig. 7 ist mit durchgezogenen Linien diejenige Position der Blattfeder 76 gezeichnet, welche dem nur leicht gespannten Zustand der Blattfeder 76 entspricht, der sich nach dem Einfügen der nach außen gebogenen Endabschnitte 84, 84' in die Vertiefungen 82, 82' ergibt. Beim Anziehen des Haltebügels 60 bei der Montage der Bremse wird eine steigende Kraft F auf die Blattfeder 76 aufgebracht, so daß diese sich im voll angezogenen Zustand des Haltebügels 60 in der gestrichelt gezeichneten Stellung befindet, in der sich der Punkt C der Blattfeder 76 in die Position D bewegt hat. Die Verwölbung der im entspannten Zustand zunächst geraden Seitenabschnitte 108, 108' der Blattfeder ist dadurch bedingt, daß die Gesamtlänge der Blattfeder zwischen den Punkten A und B konstant ist. In dieser Ruhestellung der Bremse drückt die Blattfeder 76 die Tragplatte 72 mit einer solchen Kraft gegen die Abstützflächen 67 (Fig. 4), daß auf die Tragplatte wirkende Kräfte entsprechend einer Beschleunigung von 150 m/sec² aufgefangen werden, ohne daß sich die Tragplatte von den Abstützflächen 67 löst. Erst bei größeren Kräften entsprechend einer Beschleunigung von bis 300 m/sec² bewegt sich die Tragplatte 72 relativ zur Blattfeder 76 derart, daß der Punkt E der Tragplatte 79 gegen den Punkt D der Blattfeder 76 anstößt.

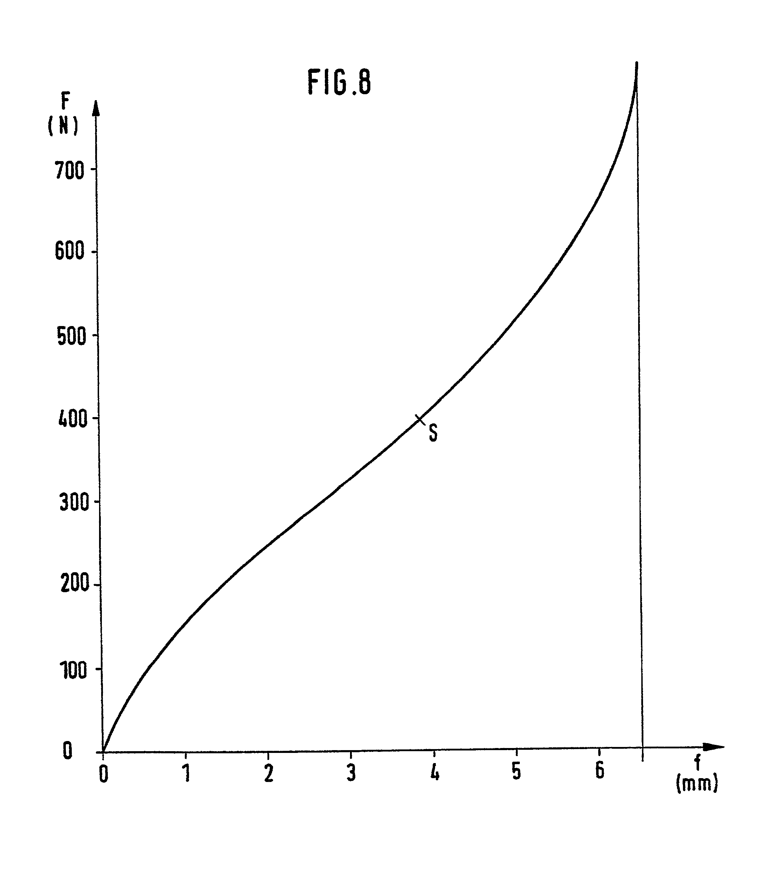

In Fig. 8 ist die Kraft F in Abhängigkeit von der Auslenkung f des Punktes C der Blattfeder 76 dargestellt. Der Arbeitspunkt der Blattfeder 76 ist mit S bezeichnet. Der Arbeitspunkt S der Blattfeder 76 gemäß Fig. 8 entspricht der Stellung des Punktes D der Fig. 7. In dieser Stellung befindet sich die Bremse im normalen, eingebauten Zustand, ohne daß größere Beschleunigungen auf sie wirken. Der Arbeitspunkt S entspricht einem Wendepunkt der Kennlinie. Der Arbeitsbereich der Blattfeder 76 liegt in Fig. 8 rechts oberhalb des Arbeitspunktes S. Wie dem Kennlinienverlauf gemäß Fig. 8 zu entnehmen ist, steigt die rücktreibende Kraft der Blattfeder zunächst moderat an, um sodann bei größeren Auslenkungen mit wachsendem Gradienten zu steigen. Bei extrem starken Auslenkungen oberhalb von 6 mm nähert sich die Kennlinie asymptotisch dem Anschlag bei 6,5 mm, so daß auch bei ungewöhnlich starken Beschleunigungen der Bremse die Tragplatte 72 (und entsprechend auch die andere Tragplatte 72' sowie die Druckverteilerplatte 55) nicht hart gegen die Führungen 67 (Fig. 4) schlagen können. Am Anschlagpunkt bei 6,5 mm der Fig. 8 hat sich der Punkt E der Tragplatte 72 bis zum Punkt D der Blattfeder 76 bewegt.

Durch die Reibung der Laschen 86 an den Seitenwänden der Tragplatte 72 (bzw. der Druckverteilerplatte 55' wird ein Teil der Schwingungsenergie verzehrt.

## Patentansprüche

1. Scheibenbremse mit einem Belagschacht, in dem Belag-Tragplatten (72, 72') und gegebenenfalls eine Druckverteilerplatte (55) mittels Blattfedern (76, 78, 80) niedergehalten werden, wobei sich eine Blattfeder jeweils auf einer Seite an einem bewegbaren Rahmen (12) der Bremse oder an einem ortsfesten Bremsträger (10) abstützt, und wobei die Blattfeder auf der anderen Seite auf die Belag-Tragplatten und gegebenenfalls auf die Druckverteilerplatte drückt, im entspannten Zustand einen gewölbten Mittelabschnitt (106) und zwei zumindest annähernd gerade Seitenabschnitte (108, 108') aufweist, und mit ihren Endabschnitten (84, 84') an der Belag-Tragplatte bzw. der Druckverteilerplatte in Streckrichtung fixiert ist, und wobei zwischen dem gewölbten Mittelabschnitt (106) der Blattfeder und der niederzuhaltenden Belag-Tragplatte bzw. Druckverteilerplatte ein Freiraum (105) vorhanden ist, dadurch gekennzeichnet, daß im Übergangsbereich vom im entspannten Zustand gewölbten Mittelabschnitt zu den Seitenabschnitten (108, 108') einer Blattfeder jeweils zwei die Belag-Tragplatten bzw. Druckverteilerplatte beidseitig übergreifende Laschen (86) vorgesehen sind, daß die Endabschnitte (84, 84') der Blattfeder (76, 78, 80) von der niederzuhaltenden Belag-Tragplatte (72) bzw. der Druckverteilerplatte (74) etwa halbkreisförmig weggekrümmt sind und in komplementär halbkreisförmig ausgeformte Vertiefungen (82, 82') in der Belag-Tragplatte bzw. Druckverteilerplatte eingreifen und daß die Blattfeder (76, 78, 80) eine im wesentlichen S-förmige Kennlinie (8) aufweist, die sich bei Auslenkungen der Blattfeder oberhalb des Wendepunktes (S) asymptotisch der dem Festanschlag der Belag-Tragplatte (72, 72') entsprechenden Linie nähert.

2. Scheibenbremse nach Anspruch 1, dadurch gekennzeichnet, daß für jede Belag-Tragplatte (72, 72') bzw. Druckverteilerplatte (74) der Bremse eine gesonderte Blattfeder (76, 78, 80) vorgesehen ist.

3. Scheibenbremse nach einem der Ansprüche 1 oder 2, dadurch gekennzeichnet, daß im entspannten Zustand der Mittelabschnitt (106) der Blattfeder (76, 78, 80) zumindest annähernd kreisbogenförmig ist und die Seitenabschnitte (108, 108') sich tangential anschließen und daß im extrem gespannten Zustand der Mittelabschnitt der Blattfeder zumindest annähernd begradigt und die Seitenabschnitte gewölbt sind.

4. Scheibenbremse nach einem der vorhergehenden Ansprüche, dadurch gekennzeichnet, daß im entspannten Zustand die geraden Seitenabschnitte (108, 108') der Blattfeder (76, 78, 80) sich entweder parallel zur benachbarten Kante (100, 100') der Belag-Tragplatte (72, 72') bzw. Druckverteilerplatte (74) erstrecken oder einen spitzen Winkel zu dieser einnehmen und daß die dem Mittelabschnitt (106) der Blattfeder benachbarte Kante (104) der Belag-Tragplatte bzw. Druckverteilerplatte zumindest annähernd gerade ist.

5. Scheibenbremse nach einem der Ansprüche 2 bis 4, dadurch gekennzeichnet, daß die Blattfedern (76, 78, 80) sich an einem Haltebügel (60) abstützen, der am Rahmen (12) befestigt ist und sich parallel zur Achse (A) erstreckt.

6. Scheibenbremse nach einem der vorhergehenden Ansprüche, dadurch gekennzeichnet, daß der Mittelabschnitt (106) der Blattfeder (76, 78, 80) länger ist als jeder der Seitenabschnitte (108, 108').

7. Blattfeder für eine Scheibenbremse mit einem Belagschacht, in dem Belag-Tragplatten (72, 72') und gegebenenfalls eine Druckverteilerplatte (55) mittels Blattfedern (76, 78, 80) niedergehalten werden, wobei sich die Blattfeder jeweils auf einer Seite an einem bewegbaren Rahmen (12) der Bremse oder an einem ortfesten Bremsträger (10) abstützt, und wobei die Blattfeder auf der anderen Seite auf die Belag-Tragplatten und gegebenenfalls auf die Druckverteilerplatte drückt, im entspannten Zustand einen gewölbten Mittelabschnitt (106) und zwei zumindest annähernd gerade Seitenabschnitte (108, 108') aufweist und mit ihren Endabschnitten (84, 84') an der Belag-Tragplatte bzw. der Druckverteilerplatte in Streckrichtung fixiert ist, und wobei zwischen dem gewölbten Mittelabschnitt (106) der Blattfeder und der niederzuhaltenden Belag-Tragplatte bzw. Druckverteilerplatte ein Freiraum (105) vorhanden ist, dadurch gekennzeichnet, daß im Übergangsbereich vom im entspannten Zustand gewölbten Mittelabschnitt zu den Seitenabschnitten (108, 108') einer Blattfeder jeweils zwei die Belag-Tragplatten bzw. Druckverteilerplatte beidseitig übergreifende Laschen (86) vorgesehen sind, daß die Endabschnitte (84, 84') der Blattfeder (76, 78, 80) von der niederzuhaltenden Belag-Tragplatte (72) bzw. der Druckverteilerplatte (74) etwa halbkreisförmig weggekrümmt sind und in komplementär halbkreisförmig ausgeformte Vertiefungen (82, 82') in der Belag-Tragplatte bzw. Druckverteilerplatte eingreifen und daß die Blattfeder (76, 78, 80) eine im wesentlichen S-förmige Kennlinie (8) aufweist, die sich bei Auslenkungen der Blattfeder oberhalb des Wendepunktes (S) asymptotisch der dem Festanschlag der Belag-Tragplatte (72, 72') entsprechenden Linie nähert.

8. Blattfeder gemäß Anspruch 7, dadurch gekennzeichnet, daß im entspannten Zustand der Mittelabschnitt (106) der Blattfeder (76, 78, 80) zumindest annähernd kreisbogenförmig ist und die Seitenabschnitte (108, 108') sich tangential anschließen und daß im extrem gespannten Zustand der Mittelabschnitt der Blattfeder zumindest annähernd begradigt und die Seitenabschnitte gewölbt sind.

9. Blattfeder nach einem der Ansprüche 7 oder 8, daß der Mittelabschnitt (106) der Blattfeder (76, 78, 80) länger ist als jeder der Seitenabschnitte (108, 108').

**Revendications**

1. Frein à disque comprenant un puits à garnitures dans lequel des plaquettes supports de garnitures (72, 72') et éventuellement une plaquette de répartition de la pression (55) sont retenues à l'aide de ressorts lames (76, 78, 80), chaque ressort lame étant appuyé d'un côté contre un étrier mobile (12) du frein ou contre un support de frein fixe (10), tandis que, de l'autre côté, le ressort lame presse sur la plaquette support de garniture et éventuellement sur la plaquette de répartition de la pression, le ressort lame présentant à l'état détendu un segment central bombé (106) et deux segments latéraux au moins approximativement rectilignes (108, 108'), et étant arrêté dans le sens de l'allongement contre la plaquette support de garniture ou contre la plaquette de répartition de la pression par ses segments terminaux (84, 84') et un espace libre (105) subsistant entre le segment central bombé (106) du ressort lame et la plaquette support de garniture ou la plaquette de répartition de la pression qu'il s'agit de retenir, caractérisé en ce que, dans chaque région de transition entre le segment central bombé à l'état détendu et les segments latéraux (108, 108') d'un ressort lame, sont prévues deux pattes (86) qui empiètent des deux côtés sur les plaquettes supports de garnitures ou sur la plaquette de répartition de la pression, en ce que les segments terminaux (84, 84') du ressort lame (76, 78, 80) sont recourbés à peu près en demi-cercle dans le sens qui les éloigne de la plaquette support de garniture (72) à retenir ou de la plaquette de répartition de la pression (74) et sont engagés dans des évidements (82, 82') de forme semi-circulaire complémentaire qui sont ménagés dans la plaquette support de garniture ou la plaquette de répartition de la pression, et en ce que le ressort lame (76, 78, 80) possède une caractéristique (8) sensiblement en S qui, lors des excursions du ressort lame, s'approche asymptotiquement, au-dessus du point d'inflexion, de la ligne qui correspond à la butée fixe de la plaquette support de garniture (72, 72').

2. Frein à disque selon la revendication 1, caractérisé en ce qu'il est prévu un ressort lame distinct (76, 78, 80) pour chaque plaquette support de garniture (72, 72') ou pour la plaquette de répartition de la pression (74) du frein.

3. Frein à disque selon une des revendications 1 et 2, caractérisé en ce que, à l'état détendu, le segment central (106) du ressort lame (76, 78, 80) est de forme au moins approximativement en arc de cercle, et les segments latéraux (108, 108') se raccordent tangentiellement, et en ce que, à l'état de tension extrême, le segment central du ressort lame est au moins approximativement redressé et les segments latéraux bombés.

4. Frein à disque selon une des revendications précédentes, caractérisé en ce que, à l'état détendu, soit les segments latéraux rectilignes (108, 108') du ressort lame (76, 78, 80) s'étendent parallèlement au bord adjacent (100, 100') de la plaquette support de garniture (72, 72') ou de la plaquette de répartition de la pression (74), soit ils forment un angle aigu avec ce bord et en ce que le bord (104) de la plaquette support de garniture ou de la plaquette de répartition de la pression qui est adjacent au segment central (106) du ressort lame est au moins approximativement rectiligne.

5. Frein à disque selon une des revendications 2 à 4, caractérisé en ce que les ressorts lames (76, 78, 80) prennent appui contre un arceau de retenue (60) qui est fixé à l'étrier (12) et s'étend parallèlement à l'axe (A).

6. Frein à disque selon une des revendications précédentes, caractérisé en ce que le segment central (106) du ressort lame (76, 78, 80) est plus long que chacun des segments latéraux (108, 108').

7. Ressort lame pour un frein à disque comprenant un puits à garnitures, dans lequel des plaquettes supports de garnitures (72, 72') et éventuellement une plaquette de répartition de la pression (55) sont retenues à l'aide de ressorts lames (76, 78, 80), le ressort lame prenant appui d'un côté contre un étrier mobile (12) du frein ou contre un support de frein fixe (10), tandis que, de l'autre côté, le ressort lame presse sur les plaquettes supports de garnitures et éventuellement sur la plaquette de répartition de la pression, le ressort lame présentant à l'état détendu un segment central bombé (106) et deux segments latéraux (108, 108') au moins approximativement rectilignes et étant arrêté dans le sens de l'allongement contre la plaquette support de garniture ou la plaquette de répartition de la pression par ses segments terminaux (84, 84'), et un espace libre (105) subsistant entre le segment central bombé (106) du ressort lame et la plaquette support de garniture ou plaquette de répartition de la pression qu'il s'agit de retenir, caractérisé en ce que, dans chaque région de transition entre le segment central bombé à l'état détendu et les segments latéraux (108, 108') d'un ressort lame, sont prévues deux pattes (86) qui empiètent des deux côtés sur les plaquettes supports de garnitures ou sur la plaquette de répartition de la pression, en ce que les segments terminaux (84, 84') du ressort lame (76, 78, 80) sont recourbés à peu près en demi-cercle dans le sens qui les éloigne de la plaquette support de garniture (72) ou de la plaquette de répartition de la pression (74), et sont engagés dans des évidements de forme semi-circulaire complémentaire (82, 82') qui sont ménagés dans la plaquette support de garniture ou dans la plaquette de répartition de la pression, et en ce que le ressort lame (76, 78, 80) possède une caractéristique (8) sensiblement en S qui, lors des excursions du ressort lame, s'approche, au-dessus du point d'inflexion (8), de la ligne qui correspond à la butée fixe de la plaquette support de garniture (72, 72').

8. Ressort lame selon la revendication 7, caractérisé en ce que, à l'état détendu, le segment central (106) du ressort lame (76, 78, 80) est de forme au moins approximativement en arc de cercle et les segments latéraux (108, 108') se raccordent tangentiellement , et en ce que, à l'état de tension extrême, le segment central du ressort lame est au moins approximativement redressé et les segments latéraux bombés.

9. Ressort lame selon une des revendications 7 et 8, caractérisé en ce que le segment central (106) du ressort lame (76, 78, 80) est plus long que chacun des segments latéraux (108, 108').

**Claims**

1. A disc brake having a pad opening in which lining backplates (72, 72') and a pressure distributor plate (55), if any, are held down by leaf springs (76, 78, 80), one leaf spring each resting at one side on a movable frame (12) of the brake or on a stationary carrier member (10) of the brake and the leaf spring, at the other side, pressing on the lining backplates and the pressure distributor plate, if any, and, in relaxed condition, comprising a curved center portion (106) and two at least approximately straight side portions (108, 108'), and being fixed at its end portions (84, 84') at the lining backplate or the pressure distributor plate in the direction of elongation, and a free space (105) being present between the curved center portion (106) of the leaf spring and the lining backplate or pressure distributor plate to be held down, characterized in that two lugs (86) each straddling the lining backplates and the pressure distributor plate, respectively, at both sides are provided in the transitional range between the center portion which is curved in relaxed condition and the side portions (108, 108') of a leaf spring, in that the end portions (84, 84') of the leaf spring (76, 78, 80) are curved approximately in semicircular shape away from the lining backplate (72) or pressure distributor plate (74) to be held down and engage in complementary semicircularly formed depressions (82, 82') in the lining backplate or pressure distributor plate, respectively, and in that the leaf spring (76, 78, 80) has a substantially S-shaped characteristic (8) which asymptotically approaches the line corresponding to the fixed abutment of the lining backplate (72, 72') with deflections of the leaf spring above the turning point (S).

2. The disc brake as claimed in claim 1, characterized in that a separate leaf spring (76, 78, 80) is provided for each lining backplate (72, 72') and the pressure distributor plate (74) of the brake.

3. The disc brake as claimed in one of claims 1 or 2, characterized in that the center portion (106) of the leaf spring (76, 78, 80) in relaxed condition is at least approximately of circular arc shape and followed tangentially by the side portions (108, 108'), and in that, in extremely stressed condition, the center portion of the leaf spring is at least approximately straightened and the side portions are bowed.

4. The disc brake as claimed in one of the preceding claims, characterized in that the straight side portions (108, 108') of the leaf spring (76, 78, 80) in relaxed condition either extend parallel to the adjacent edge (100, 100') of the lining backplate (72, 72') or pressure distributor plate (74) or include an acute angle with the same, and in that the edge (104) of the lining backplate or pressure distributor plate adjacent the center portion (106) of the leaf spring is at least approximately straight.

5. The disc brake as claimed in one of claims 2 to 4, characterized in that the leaf springs (76, 78, 80) are supported on a retaining strap (60) which is fixed to the frame (12) and extends parallel to axis (A).

6. The disc brake as claimed in one of the preceding claims, characterized in that the center portion (106) of the leaf spring (76, 78, 80) is longer than each of the side porticns (108, 108').

7. A leaf spring for a disc brake having a pad opening in which lining backplates (72, 72') and a pressure distributor plate (55), if any, are held down by leaf springs (76, 78, 80), the leaf spring each resting at one side on a movable frame (12) of the brake or on a stationary carrier member (10) of the brake and the leaf spring, at the other side, pressing on the lining backplates and the pressure distributor plate, and, in relaxed condition, comprising a curved center portion (106) and two at least approximately straight side portions (108, 108'), and being fixed at its end portions (84, 84') at the lining backplate or the pressure distributor plate in the di-

13 EP 0 248 385 B1

rection of elongation, and a free space (105) being present between the curved center portion (106) of the leaf spring and the lining backplate or pressure distributor plate to be held down, characterized in that two lugs (86) each straddling the lining backplate and the pressure distributor plate, respectively, at both sides are provided in the transitional range between the center portion which is curved in relaxed condition and the side portions (108, 108') of a leaf spring, in that the end portions (84, 84') of the leaf spring (76, 78, 80) are curved approximately in semicircular shape away from the lining backplate (72) or pressure distributor plate (74) to be held down and engage in complementary semicircularly formed depressions (82, 82') in the lining backplate or pressur distributor plate, respectively, and in that the leaf spring (76, 78, 80) has a substantially S-shaped characteristic (8) which asymptotically approaches the line corresponding to the fixed abutment of the lining backplate (72, 72') with deflections of the leaf spring above the turning point (S).

8. The leaf spring as claimed in claim 7, characterized in that the center portion (106) of the leaf spring (76, 78, 80) in relaxed condition is at least approximately of circular arc shape and followed tangentially by the side portions (108, 108') and that, in extremely stressed condition, the center portion of the leaf spring is at least approximately straightened and the side portions are bowed.

9. The leaf spring as claimed in one of claims 7 or 8, characterized in that the center portion (106) of the leaf spring (76, 78, 80) is longer than each of the side portions (108, 108').

8

FIG.1

FIG. 2

EP 0 248 385 B1

FIG.3

FIG.5

FIG.4

FIG.6

FIG.7

FIG.8